# EUROPÄISCHE PATENTSCHRIFT

(11) **EP 1 664 470 B1**
(45) Veröffentlichungstag und Bekanntmachung des Hinweises auf die Patenterteilung: **23.07.2008**
(21) Anmeldenummer: 04762719.5
(22) Anmeldetag: 21.08.2004
(51) Int. Cl.: E05F 15/16, F16H 49/00, H02K 7/116, H02K 21/00, E05F 15/18

(54) **ANTRIEBSSYSTEM FÜR VERSTELLEINRICHTUNGEN IN KRAFTFAHRZEUGEN**
DRIVE SYSTEM FOR REGULATING DEVICES IN MOTOR VEHICLES
SYSTEME D'ENTRAINEMENT POUR DISPOSITIFS DE REGLAGE DE VEHICULES AUTOMOBILES

(30) Priorität: 21.08.2003 DE 20313273 U
(43) Veröffentlichungstag der Anmeldung: 07.06.2006
(73) Patentinhaber: Brose Fahrzeugteile GmbH & Co. KG, Coburg, 96450 Coburg (DE)
(72) Erfinder: SESSELMANN, Helmut, 96523 Steinach (DE)
(74) Vertreter: Ninnemann, Detlef
(86) Internationale Anmeldenummer: PCT/DE2004/001889
(87) Internationale Veröffentlichungsnummer: WO 2005/021915

(56) Entgegenhaltungen:
- WO-A-01/89063

## Beschreibung

Die Erfindung bezieht sich auf ein Antriebssystem für Verstelleinrichtungen in Kraftfahrzeugen gemäß dem Oberbegriff des Anspruchs 1.

Aus der WO 01/89063 A1 ist eine Antriebseinheit für Verstelleinrichtungen in Kraftfahrzeugen mit den Merkmalen des Oberbegriffs des Anspruchs 1 bekannt. Da bei dieser bekannten Antriebseinheit wenigstens ein Bauteil des Scheibenläufermotors wie beispielsweise die Antriebswelle, der magnetische Rückschluss oder die motorseitige Gehäuseschale eine zusätzliche mechanische Funktion des Umlaufrädergetriebes und/oder ein mechanisches Bauteil wie die getriebeseitige Gehäuseschale eine Funktion des Scheibenläufermotors übernimmt, zeichnet sich die Antriebseinheit wegen der Mehrfachnutzung einzelner Bauteile durch eine minimale Teileanzahl und ein minimales Gewicht sowie infolge der Verschachtelung und damit infolge des hohe Integrationsgrades der Bauteile der Antriebseinheit durch ein geringes Volumen und insbesondere durch seine flache Bauweise aus.

Im Unterschied zu üblicherweise verwendeten Antriebseinheiten aus Stabankermotoren mit Schneckengetrieben als Untersetzungsgetriebe, die bedingt durch ihre Bauart nicht für rechte und linke Fahrzeugtüren gleichermaßen geeignet sind, deren Bauhöhe im Türbereich störend ist, deren Einbaulage insbesondere durch Drehen der Antriebseinheit nicht flexibel ist, bei denen der Motorschwerpunkt außerhalb der Anschraubung der Antriebseinheit liegt und deren Systemmasse sehr hoch ist, eignet sich die Antriebseinheit nach der WO 01/89063 A1 aufgrund ihrer vorstehend genannten Eigenschaften insbesondere zum Einbau in Fahrzeugtüren, da sie problemlos in ein Basisteil, Türmodul oder eine Trägerplatte in beliebiger Winkelstellung und unabhängig von der Türseite eingebunden werden kann und eine einzige Montageebene und damit einen variablen Einsatz schafft.

Eine weitere Verringerung des Bauvolumens der aus der WO 01/89063 A1 bekannten Antriebseinheit stößt auf Stabilitätsgrenzen, wenn die Materialstärke der verwendeten Bauteile der Antriebseinheit vermindert und die Abstände zwischen den bereits mit hohem Integrationsgrad ineinander verschachtelten Bauteile verringert wird. So würde der geringe Luftspalt zwischen der Ankerscheibe und den Permanentmagneten des Stators des Scheibenläufermotors bei einer nicht dauerhaft exakt ausgerichteten und stabil gelagerten Ankerscheibe zu Kontakten der Ankerscheibe mit den Permanentmagneten und damit zu einem vorzeitigen Verschleiß und Ausfall der Antriebseinheit führen. Weiterhin wäre die mechanische Stabilität des Umlaufrädergetriebes gefährdet wenn die Zentrierung der mechanischen Bauteile nicht auf Dauer gewährleistet ist und auch unter starker Belastung keine Deformationen der Getriebeteile auftreten.

Der vorliegenden Erfindung liegt daher die Aufgabenstellung zugrunde, ein Antriebssystem für Verstelleinrichtungen in Kraftfahrzeugen der eingangs genannten Art zu schaffen, das eine weitere Verringerung des Bauvolumens und insbesondere eine extrem flache Bauweise ohne Beeinträchtigung der Funktion, mechanischen Stabilität und Dauerhaltbarkeit der Antriebseinheit gewährleistet.

Diese Aufgabe wird erfindungsgemäß durch die Merkmale des Anspruchs 1 gelöst.

Die erfindungsgemäße Lösung ermöglicht die Herstellung eines Antriebssystems für Verstelleinrichtungen in Kraftfahrzeugen mit minimalen Bauvolumen und insbesondere ein extrem flaches Antriebssystem, ohne dass Beeinträchtigungen der Funktion, mechanischen Stabilität und Dauerhaltbarkeit des Antriebssystems in Kauf genommen werden müssen.

Damit eignet sich das erfindungsgemäße Antriebssystem mit seiner geringen Bauhöhe, dem reduzierten Gewicht und den durch Materialeinsparungen sowie die Mehrfachfunktion der verwendeten Bauteile bedingten reduzierten Kosten in besonderem Maße für elektromotorische Verstelleinrichtungen in Kraftfahrzeugen, wo das zur Verfügung stehende Einbauvolumen gering ist und bei einem Einbau in Kraftfahrzeugtüren oder in Dachkonstruktionen eine minimale Bauhöhe sowie variable Einsetzbarkeit gefordert wird.

Die erfindungsgemäße Lösung geht von der Erkenntnis aus, dass eine exakte Lagerung sowie axiale Führung und Ausrichtung der Bauteile des Antriebssystems von elementarer Bedeutung für die mechanische Stabilität des Antriebssystems und eine Verringerung der Abstände zwischen den Bauteilen sowie deren Gewichts- und Dickenreduzierung ist. Durch das Aufeinanderstecken der feststehenden Antriebsachse, des Lagerzapfens des Abtriebshohlrades und des Antriebsnabenzylinders der Antriebsnabe wird aufgrund der dadurch erzielbaren Länge der Lagerung trotz gedrängten Aufbaus eine exakte und dauerhafte Führung und Ausrichtung der Ankerscheibe sowie des Lagerzapfens des langsam laufenden Abtriebshohlrades erzielt, der somit auf der gesamten Länge der feststehenden Antriebsachse zur Vermeidung von Taumelbewegungen sicher gelagert und geführt ist.

Vorzugsweise entspricht die Länge des Antriebsnabenzylinders im wesentlichen der Höhe der Laufrollen, so dass für die Führung und Ausrichtung der Ankerscheibe die gesamte Länge oder Bautiefe dieses Teils des Umlaufrädergetriebes genutzt wird, das ohnehin für die Anbringung und Führung des radialflexiblen Rings erforderlich ist, der sowohl mit der Innenverzahnung des gehäusefesten Hohlrades als auch mit der Innenverzahnung des Abtriebshohlrades kämmt.

Zur Sicherung der Lage und Ausrichtung der feststehenden Antriebsachse ist diese mit einem ersten Gehäusedeckel des das Antriebselement der Verstelleinrichtung, den Scheibenläufermotor und das Umlaufrädergetriebe einfassenden Gehäuses verbunden und an einem zweiten Gehäusedeckel des Gehäuses abgestützt.

Durch die Wahl der Materialpaarung im Bereich der Lagerstellen zwischen der feststehenden Antriebsachse, dem Lagerzapfen des Abtriebshohlrades sowie dem Antriebsnabenzylinder der Antriebsnabe, wobei die feststehende Antriebsachse und der Antriebsnabenzylinder aus Stahl oder einer Stahllegierung und der Lagerzapfen aus Sintermetall bestehen, werden optimale Lagereigenschaften erzielt. Dadurch ist es weiterhin möglich, den hochwertigen und vergleichsweise teuren sintermetallischen Lagerwerkstoff nur einmal zu verwenden und dadurch sowohl eine optimale Lagerung zur feststehenden Antriebsachse als auch zur schnelldrehenden Antriebsnabe herzustellen.

Eine weitere wesentliche Maßnahme zur Volumen- und insbesondere zur Bautiefenverringerung des Antriebssystems besteht darin, das gehäusefeste Hohlrad mit einer Basisscheibe zu verbinden oder als Teil einer Basisscheibe auszubilden, die die Permanentmagnete des Scheibenläufermotors trägt und an ihrer Peripherie angeordnete Zentrierelemente aufweist, die mindestens einen der beiden Gehäusedeckel zur Basisscheibe zentrieren.

Die Basisscheibe zentriert als zentrales Positionierelement zumindest den einen, vorzugsweise aber beide Gehäusedeckel des Gehäuses und trägt gleichzeitig die Hohlradverzahnung, die entweder einstückig an die Basisscheibe angeformt ist oder in einer zweistückigen Variante als Kunststoff- oder Metallteil im Zweikomponenten-System mit der Basisscheibe verbunden wird, so dass die Basisscheibe ohne Bautiefenvergrößerung des Antriebssystems eine Doppelfunktion als Getriebeelement und eines Zentrierelementes zur exakten Ausrichtung und Lagerung der Bauteile des Antriebssystems erfüllt.

Zur Steigerung der mechanischen Stabilität der Basisscheibe kann diese mit einem gekröpften peripheren Rand sowie zur Positionierung und Lagesicherung der Permanentmagnete mit Profilierungen versehen werden.

Weiterhin kann die Basisscheibe über Prägungen und/oder gekröpfte Laschen, die aus der Basisscheibe herausgestanzt oder umgebogen sind, mit einer die Permanentmagnete tragenden Scheibe vorzugsweise aus Kunststoff verbunden werden.

Auch in den nach außen gerichteten Rand des gehäusefesten Hohlrades können Aufnahmebereiche eingearbeitet werden, die der Kontur der Permanentmagnete des Scheibenläufermotors zumindest abschnittsweise angepasst sind, so dass die Permanentmagnete dort in einfacher Weise positioniert werden können.

Insbesondere können die Aufnahmebereiche im nach außen gerichteten Rand des gehäusefesten Hohlrades als radial nach außen offene Aufnahmefächer ausgebildet werden.

Vorzugsweise besteht die Basisscheibe aus Kunststoff, in den Aufnahmebereiche eingearbeitet sind, die der Kontur der Permanentmagnete des Scheibenläufermotors zumindest abschnittsweise angepasst sind.

Die Aufnahmebereiche des gehäusefesten Hohlrades oder der Basisscheibe umschließen die Permanentmagnete derart weit, dass eine definierte Lage der Permanentmagnete gesichert ist.

Die Positionsbestimmung der Permanentmagnete wird durch das aus Kunststoff oder einem paramagnetischen Werkstoff hergestellte gehäusefeste Hohlrad gleichzeitig zur Montagevereinfachung mit ausgeformt. Die Befestigung der Permanentmagnete erfolgt mit der Einbringung der Hohlradverzahnung bzw. über Befestigungselemente zum späteren formschlüssigen oder kraftschlüssigen Verbund der Basisscheibe mit den in Kunststoff eingebundenen Permanentmagneten.

Die Permanentmagnete selbst werden insbesondere aus kunststoffgebundenen Hochenergie-Werkstoffen mit ihren Möglichkeiten der Formgebung von Kunststoffteilen spritztechnisch hergestellt. Ebenheit und Toleranzen werden über das Werkzeug in hohem Maße sichergestellt, so dass die Basisscheibe im Verbund mit dem kunststoffgebundenen Magnetsystem ohne parasitäre magnetische Verluste als Rückschluss genutzt werden kann. Dabei entfällt das Aufkleben und Befestigen der Permanentmagnete, weil Magnetmaterial und Basisscheibe hinterschnittig miteinander verbunden werden können.

Um Masse zu sparen können die ferritischen Metallteile durch Tailored-Blanks nur im Bereich der flussführenden Rückschlüsse aufgedickt werden.

Ebenfalls zur Erhöhung der Stabilität einer sehr dünn ausgebildeten Antriebsnabe kann diese mehrere aus ihrer Fläche herausgebildete Kröpfungen aufweisen, die zu der Seite der Laufrollen gerichtet sind, und damit einen ohnehin verfügbaren Platz nutzen und demzufolge keine Bautiefenvergrößerung verursachen. Dadurch wird die Voraussetzung dafür geschaffen, dass das vorzugsweise auf Gleit- oder Wälzlager gelagerte Laufrollenpaar asymmetrisch platziert werden kann, was eine weitere Reduktion der Bauhöhe zur Folge hat.

Zur Vereinfachung der Herstellung und Materialeinsparung können der Antriebsnabenzylinder und/oder die Laufrollenlager als Durchzüge der Antriebsnabe ausgebildet und die Außenzylinderfläche der Durchzüge durch gehärtete Stahlbüchsen mit einem Bund abgestützt werden.

Zur besseren Führung des radialflexiblen Ringes weisen die Laufrollen insbesondere Nuten auf.

Um die Kraftspitze beim Einfahren der Verstelleinrichtung in eine Endstellung wie beispielsweise die oberen und unteren Anschläge eines Fensterhebers abzufangen, sind in das Abtriebshohlrad des Antriebssystems in Umfangsrichtung wirksame Dämpfungselemente integriert. Dadurch wird die Dämpfung im Antriebssystem radial weiter nach außen in den Bereich der Anbindung verlegt und das Antriebssystem kann mit Hilfe einer Bajonettverbindung beispielsweise in einem Türmodul befestigt werden.

Alternativ oder zusätzlich kann das Abtriebshohlrad mit einer Schlingfederbremse verbunden werden, wodurch die Selbsthemmung des Antriebssystems erhöht und beispielsweise bei einem Fensterheber verhindert wird, dass durch Herunterdrücken der Fensterscheibe ein unberechtigter Zugang zum Fahrzeuginneren geschaffen wird.

Optional kann im Abtriebshohlrad ein Stahlring vorgesehen werden, der die auf das Abtriebshohlrad einwirkenden radialen Kräfte abstützt. Dieser Stahlring kann zusätzlich die Funktion des Bremsrings für den Einbau der Schlingfeder übernehmen.

Weiterhin kann im Abtriebshohlrad eine Sintermetall-Kunststoffverbindung vorgesehen werden.

Das Antriebselement der Verstelleinrichtung, beispielsweise eine Seiltrommel eines Fensterhebers, kann entweder in axialer Richtung mit dem Abtriebshohlrad verbunden und über in den zweiten Gehäusedeckel integrierte Halteklammern axial fixiert werden oder das Abtriebshohlrad wird in das Antriebselement der Verstelleinrichtung integriert bzw. angeformt.

Die erste Alternative stellt eine Servicelösung bereit, bei der im Störungs- oder Verschleißfall die Seiltrommel ohne Ersatz der Motor/Getriebe-Einheit ausgetauscht werden kann, während bei der zweiten Alternative durch die gesteigerte Integration eine ultraflache Bauform des Antriebssystems mit integriertem Antriebselement der Verstelleinrichtung geschaffen wird.

Anhand von Ausführungsbeispielen, die in den Figuren 1 bis 3 der Zeichnung dargestellt sind, soll die Erfindung und der der Erfindung zugrunde liegende Gedanke näher erläutert werden. Es zeigen:
- Fig. 1: eine perspektivische Explosionsdarstellung der Bau- und Funktionsteile einer Ausführungsform des erfindungsgemäßen ultraflachen Antriebssystems für einen Seilfensterheber;
- Fig. 2: einen Längsschnitt durch das Antriebssystem gemäß Fig. 1 und
- Fig. 3: einen Längsschnitt durch ein Antriebssystem für einen Seilfensterheber mit in das Abtriebshohlrad integrierter Seiltrommel.

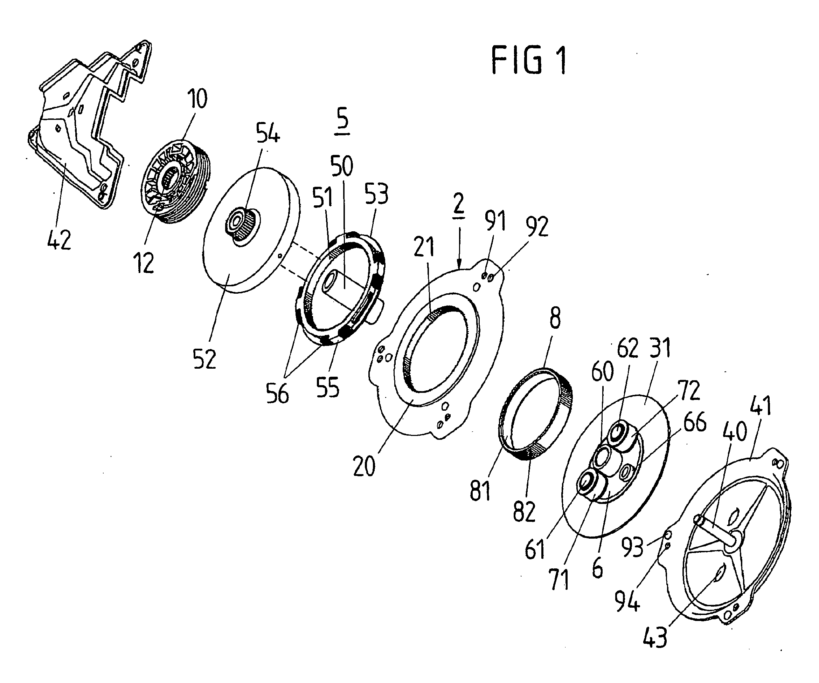

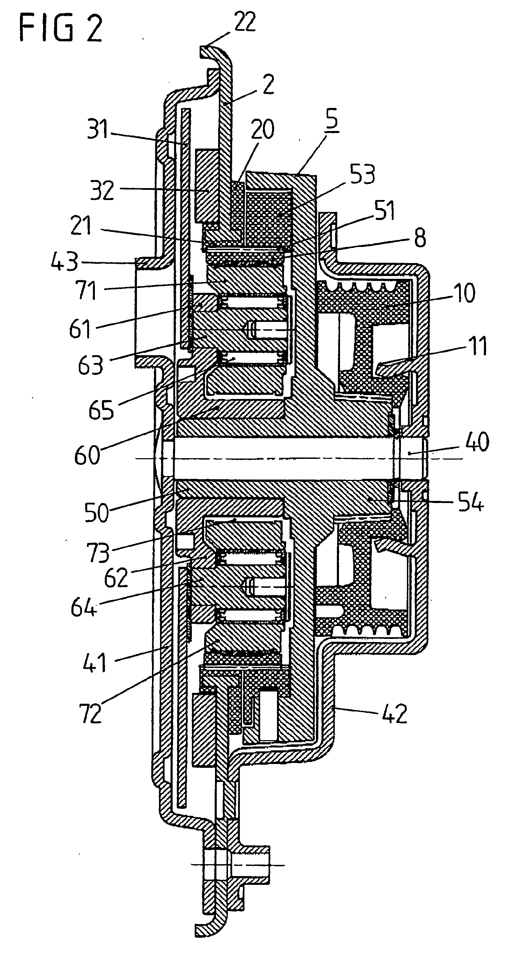

Fig. 1 zeigt eine Explosionsdarstellung eines in Fig. 2 im Längsschnitt dargestellten Antriebssystems für einen Seilfensterheber eines Kraftfahrzeugs. Das Antriebssystem setzt sich aus einem Scheibenläufermotor 3, einem Umlaufrädergetriebe 5, 6, 21, 71, 72 und einer Seiltrommel 10 zusammen, die in einem aus zwei Gehäusedeckeln 41, 42 zusammengesetzten und an einer Basisscheibe 2 zentrierten Gehäuse angeordnet sind.

Der in diesem Ausführungsbeispiel elektronisch kommutierte Scheibenläufermotor 3 setzt sich aus einer Ankerscheibe 31 und mehreren am Umfang der Basisscheibe 2 verteilt angeordneten Permanentmagneten 32 (Fig. 2) zusammen. Die Ankerscheibe 31 ist mit einer Antriebsnabe 6 verbunden, die vorzugsweise als Stahlprägeteil ausgebildet ist und einen als Antriebsnabenzylinder 60 ausgebildeten Durchzug sowie zwei Durchzüge 61, 62 für zwei Laufrollenlager 63, 64 aufweist, auf denen zwei Laufrollen 71, 72 des Umlaufrädergetriebes angeordnet und über Wälzlager 65 gegenüber den Laufrollen 71, 72 abgestützt sind. Weiterhin sind auf der Antriebsnabe 6 mehrere Kröpfungen 66 zur Erhöhung der Stabilität der Antriebsnabe 6 vorgesehen.

Alternativ zu einer als Stahlprägeteil ausgebildeten Antriebsnabe 6 kann die Antriebsnabe 6 aus Sintermetall oder hochwertigen glasfaser- oder kohlefaserverstärkten Kunststoffen oder Kombinationen dieser Werkstoffe hergestellt werden. Die Außenzylinderfläche der Durchzüge für den Antriebsnabenzylinder 60 und für die Laufrollenlager 61, 62 werden insbesondere durch gehärtete Stahlbuchsen mit Bund abgestützt. Der Antriebsnabenzylinder 60 weist eine Länge auf, die etwa der Höhe der Laufrollen 71, 72 entspricht, so dass eine maximale Führungslänge des Antriebsnabenzylinders 60 gewährleistet ist.

Das Umlaufrädergetriebe setzt sich aus einem gehäusefesten Hohlrad 20 mit einer Innenverzahnung 21 mit einer ersten Zähnezahl, einem Abtriebshohlrad 5 mit einer Innenverzahnung 51 mit einer zweiten Zähnezahl und einem radialflexiblen Ring 8 zusammen, auf dessen Innenmantelfläche 81 die Laufrollen 71, 72 abrollen und deren Außenverzahnung 82 sowohl mit der Innenverzahnung 21 des gehäusefesten Hohlrades 20 als auch mit der Innenverzahnung 51 des Abtriebshohlrades 5 kämmt. Der radialflexible Ring 8 ist zur axialen Sicherung in peripheren Nuten 73 der Laufrollen 71, 72 geführt.

Das gehäusefeste Hohlrad 20 ist mit der Basisscheibe 2 verbunden oder als Teil der Basisscheibe 2 ausgebildet. Die Basisscheibe 2 dient neben der Lagesicherung der Permanentmagnete 32 des Scheibenläufermotors 3 als zentrales Positionierelement zum Zentrieren der beiden Gehäusedeckel 41, 42 und weist zu diesem Zweck als Noppen und Vertiefungen ausgebildete Zentrierelemente 91, 92 auf, die mit den entsprechenden Gegen-Zentrierelementen 93, 94 des ersten Gehäusedeckels 41 korrespondieren. Zusammen mit dem ersten Gehäusedeckel 41 bildet die Basisscheibe 2 gleichzeitig den magnetischen Rückschluss für den Scheibenläufermotor 3 aus.

Der erste Gehäusedeckel 41 weist zur Erhöhung seiner Stabilität neben Sicken und Ausprägungen zusätzliche Kröpfungen auf, während der zweite Gehäusedeckel 42 an einem an der Basisscheibe 2 ausgebildeten Flansch bzw. an einer entsprechenden Zentrierausnehmung oder Zentrierrille ausgerichtet und fixiert wird.

Die Basisscheibe 2 ist als flacher Ring mit einer peripheren Kröpfung 22 ausgebildet und kann über Prägungen und/oder gekröpfte Laschen mit einer Scheibe vorzugsweise aus Kunststoff verbunden werden, die Aufnahmefächer für die Permanentmagnete 32 des Scheibenläufermotors 3 aufweist.

Die Innenverzahnung 21 des gehäusefesten Hohlrades 20 kann entweder in einen Metallrand der Basisscheibe 2 eingeformt oder in einer zweiteiligen Variante mit einer Hohlradverzahnung aus Kunststoff oder einer Metallkomponente im Zweikomponenten-System verbunden werden. In dieser Ausführungsform beispielsweise als Kunststoffhohlrad weist dieser Teil der Basisscheibe 2 offene oder geschlossene Aufnahmebuchten für die Permanentmagnete 32 auf und die auf das Kunststoffhohlrad einwirkenden Umfangskräfte werden durch Formschluss mit dem gekröpften Rand 22 der Basisscheibe 2 gegebenenfalls zusätzlich durch die wechselseitig herausgestanzten und gebogenen Laschen übertragen.

Das Abtriebshohlrad 5 ist in der in Fig. 2 dargestellten Ausführungsform zweiteilig ausgebildet und aus einer Abtriebstrommel 52 vorzugsweise aus Stahl und einem die Innenverzahnung 51 tragenden Kunststoffring 53 zusammengesetzt. An der Peripherie des Kunststoffrings 53 sind zu beiden Seiten peripherer Stege 55 jeweils zwei Dämpfer 56 angeordnet, die mit in Umfangsrichtung an den zylinderförmigen Rand der Abtriebstrommel 52 angeordneten Anschlägen 57 korrespondieren und Dämpfungsglieder zum Abfangen von Kraftspitzen bilden, die aus einem Einfahren des Fensterhebers in die Endstellungen resultieren.

Das Abtriebshohlrad 5 ist mit einem Lagerzapfen 50 verbunden, der sich über einen wesentlichen Teil der Länge einer die beiden Gehäusedeckel 41, 42 miteinander verbindenden feststehenden Antriebsachse 40 erstreckt, auf die feststehende Antriebsachse 40 aufgesteckt wird und den Antriebsnabenzylinder 60 trägt, so dass der Lagerzapfen 50 zwischen der feststehenden Antriebsachse 40 und dem Antriebsnabenzylinder 60 angeordnet ist. Dabei wird die Materialpaarung im Bereich der Lagerstellen zwischen der feststehenden Antriebsachse 40, dem Lagerzapfen 50 und dem Antriebsnabenzylinder 60 so gewählt, dass optimale Lagereigenschaften erzielt werden. Insbesondere wird der Lagerzapfen aus einem Sintermetall hergestellt, während die feststehende Antriebsachse 40 und der Antriebsnabenzylinder 60 aus Stahl bestehen. Dadurch ist es möglich, den hochwertigeren und kostenintensiveren sintermetallischen Lagerwerkstoff zwischen den beiden Lagern aus Stahl einzusetzen und nur einmal verwenden zu müssen, so dass eine optimale Lagerung sowohl zur feststehenden Antriebsachse 40 als auch zum schnelldrehenden Antriebsnabenzylinder 60 hergestellt wird.

Die Lagerung des Lagerzapfens 50 über nahezu die gesamte Länge der feststehenden Antriebsachse 40 sichert die Zentrierung des Abtriebshohlrades 2, so dass keine Taumelbewegungen und dadurch verursachte Geräusche auftreten und bildet gleichzeitig eine lange axiale Lagerung für den Antriebsnabenzylinder 60, so dass ebenfalls die mit geringem axialen Spiel zur Basisscheibe 2 und zum ersten Gehäusedeckel 41 angeordnete Ankerscheibe 31 sicher und unter Einhaltung eines minimalen Luftspaltes zum ersten Gehäusedeckel 41 und zur Basisscheibe 2 abgestützt ist.

Der Lagerzapfen 50 weist eine Ritzelverzahnung 54 auf, die durch eine Öffnung in der Abtriebstrommel 52 greift und zur Aufnahme einer Innenverzahnung 12 der Seiltrommel 10 dient. Die Seiltrommel 10 ist über Halteklammern 11 mit dem zweiten Gehäusedeckel 42 verbunden. Dies ergibt eine kostensparende Servicelösung, da im Verschleißfall die Seiltrommel 10 vom Antriebssystem nach Abnahme des zweiten Gehäusedeckels 42 entfernt und ausgetauscht werden kann.

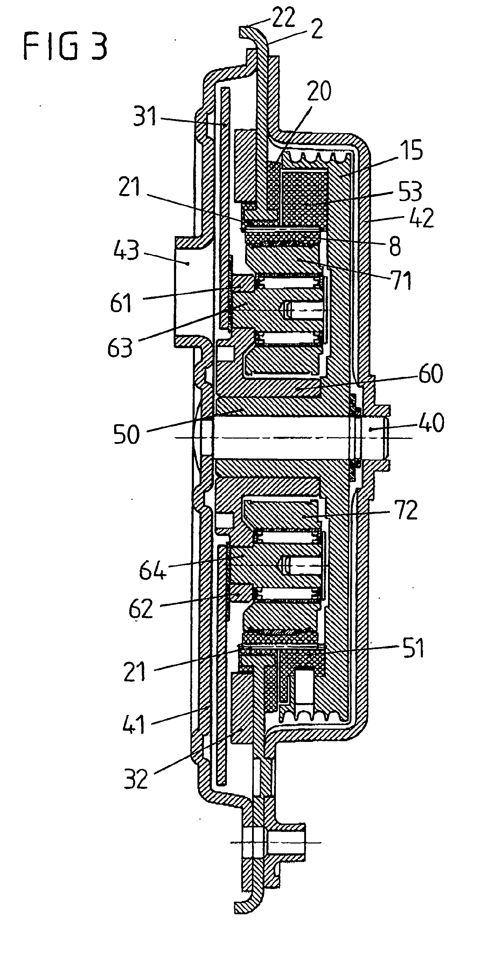

Während das in den Fig. 1 und 2 dargestellte Antriebssystem trotz des hohen Integrationsgrades und der ineinander verschachtelten Bauelemente unter Berücksichtigung einer hohen Festigkeit und Dauerhaltbarkeit in Folge der an das Abtriebshohlrad 5 angesetzten Seiltrommel 10 noch eine Gesamtdicke von beispielsweise ca. 35 mm aufweist, ist das in Fig. 3 in einem Längsschnitt dargestellte Antriebssystem ultraflach ausgebildet, indem es sämtliche Möglichkeiten zur Verschachtelung und Mehrfachnutzung von Bauteilen des Antriebssystems unter Gewährleistung einer exakten Führung der rotierenden Bauteile optimiert.

Aufbau und Funktion des in Fig. 3 dargestellten ultraflachen Antriebssystems entspricht bezüglich des Gehäuses, des Scheibenläufermotors und des Umlaufrädergetriebes dem Antriebssystem gemäß Fig. 2 mit der Maßgabe, dass in dieser Ausführungsform die Seiltrommel 15 in das Abtriebshohlrad 5 integriert ist, d.h. die Seiltrommel 15 bildet gleichzeitig das Abtriebshohlrad 5 aus und trägt an seinem hohlzylindrischen Rand die Innenverzahnung 51, die mit der Verzahnung 82 des radialflexiblen Rings 8 kämmt. Durch diese zusätzliche Maßnahme kann die Bautiefe des in Fig. 3 dargestellten ultraflachen Antriebssystems auf ca. 20 bis 23 mm verringert werden und eignet sich dementsprechend insbesondere für die Unterbringung in Fahrzeugtüren oder -dächer, wo systembedingt nur eine geringe Bautiefe zur Verfügung steht.

Das in den Fig. 1 bis 3 dargestellte Antriebssystem macht von dem Prinzip eines "Harmonic-Drive-Getriebes" Gebrauch. Nach diesem Prinzip kämmt die Verzahnung 82 des radialflexiblen Rings 8 sowohl mit der Innenverzahnung 21 des gehäusefesten Hohlrades 20 als auch mit der Innenverzahnung 51 des Abtriebshohlrades 5, die eine unterschiedliche Zähnezahl aufweisen. Die an der Zylindermantelfläche 81 des radialflexiblen Rings 8 ablaufenden Laufrollen 71, 72 greifen an zwei gegenüberliegenden Stellen am radialflexiblen Ring 8 an und verformen diesen elliptisch. Dabei wird die Verzahnung 82 des radialflexiblen Rings 8 in die zylinderförmigen Innenverzahnungen 21, 51 gedrückt und aufgrund der unterschiedlichen Zähnezahl der Innenverzahnungen 21, 51 wird ein permanentes, fortlaufendes Versetzen der ineinandergreifenden Umfangsabschnitte bewirkt, so dass eine ganze Umdrehung der Antriebsnabe 6 nur eine Weiterbewegung des Abtriebshohlrades 5 um die vorgesehene Differenz der Zähnezahl der Innenverzahnungen 21, 51 des gehäusefesten Hohlrades 20 und des Abtriebshohlrades 5 bewirkt. Dadurch kann mit diesem Umlaufrädergetriebe nach dem Prinzip eines Harmonic-Drive-Getriebes eine sehr hohe Untersetzung erreicht werden.

### Bezugszeichenliste

- 2: Basisscheibe
- 3: Scheibenläufermotor
- 5: Abtriebshohlrad
- 6: Antriebsnabe
- 8: Radialflexibler Ring
- 10: Seiltrommel
- 11: Halteklammern
- 12: Innenverzahnung
- 15: Seiltrommel
- 20: Gehäusefestes Hohlrad
- 21: Innenverzahnung
- 22: periphere Kröpfung
- 31: Ankerscheibe
- 32: Permanentmagnete
- 40: Feststehende Antriebsachse
- 41, 42: Gehäusedeckel
- 43: Kröpfung
- 50: Lagerzapfen
- 51: Innenverzahnung
- 52: Abtriebstrommel
- 53: Kunststoffring
- 54: Ritzelverzahnung
- 55: Periphere Stege
- 56: Dämpfer
- 60: Antriebsnabenzylinder
- 61, 62: Durchzüge
- 63, 64: Laufrollenlager
- 65: Wälzlager
- 66: Kröpfungen
- 71, 72: Laufrollen
- 81: Innenmantelfläche
- 82: Außenverzahnung
- 91, 92: Zentrierelemente
- 93, 94: Gegen-Zentrierelemente

## Patentansprüche

1. Antriebssystem für Verstelleinrichtungen in Kraftfahrzeugen mit einem Gehäuse, in dem ein Antriebselement der Verstelleinrichtung, ein Scheibenläufermotor mit einer Ankerscheibe (31) und ein Umlaufrädergetriebe angeordnet sind, das ein gehäusefestes Hohlrad (20) mit einer Innenverzahnung (21), ein mit dem Antriebselement der Verstelleinrichtung verbundenes Abtriebshohlrad (5) mit einer Innenverzahnung (51) und einen radialflexiblen Ring (8) aufweist, dessen Außenverzahnung (82) partiell mit den Innenverzahnungen (21, 51) des gehäusefesten Hohlrades (20) und des Abtriebshohlrades (5) kämmt und dessen Innenmantelfläche (81) auf Laufrollen (71, 72) abrollt, die auf einer mit der Ankerscheibe (31) verbundenen Antriebsnabe (6) angeordnet sind,
**dadurch gekennzeichnet,**
**dass** ein sich über einen wesentlichen Teil der Länge einer feststehenden Antriebsachse (40) erstreckender Lagerzapfen (50) des Abtriebshohlrades (5) zwischen der feststehenden Antriebsachse (40) und einem Antriebsnabenzylinder (60) der Antriebsnabe (6) zentriert ist.

2. Antriebssystem nach Anspruch 1, **dadurch gekennzeichnet, dass** die Länge des Antriebsnabenzylinders (60) im wesentlichen der Höhe der Laufrollen (71, 72) entspricht.

3. Antriebssystem nach Anspruch 1 oder 2, **dadurch gekennzeichnet, dass** die feststehende Antriebsachse (40) mit einem ersten Gehäusedeckel (41) des Gehäuses verbunden und an einem zweiten Gehäusedeckel (42) des Gehäuses abgestützt ist.

4. Antriebssystem nach mindestens einem der voranstehenden Ansprüche, **dadurch gekennzeichnet, dass** die feststehende Antriebsachse (40) und der Antriebsnabenzylinder (60) aus Stahl oder einer Stahllegierung und der zwischen der feststehenden Antriebsachse (40) und dem Antriebsnabenzylinder (60) zentrierte Lagerzapfen (50) aus einem Sintermetall bestehen.

5. Antriebssystem nach mindestens einem der voranstehenden Ansprüche, **dadurch gekennzeichnet, dass** das gehäusefeste Hohlrad (20) mit einer Basisscheibe (2) verbunden oder als Teil einer Basisscheibe (2) ausgebildet ist, die Permanentmagnete (32) des Scheibenläufermotors (3) trägt und an ihrer Peripherie angeordnete Zentrierelemente (91, 92) aufweist, die mindestens einen der beiden Gehäusedeckel (41) zur Basisscheibe (2) zentrieren.

6. Antriebssystem nach Anspruch 5, **dadurch gekennzeichnet, dass** in den nach außen gerichteten Rand des gehäusefesten Hohlrades (20) Aufnahmebereiche eingearbeitet sind, die der Kontur der Permanentmagnete (32) des Scheibenläufermotors (3) zumindest abschnittsweise angepasst sind.

7. Antriebssystem nach Anspruch 5 oder 6, **dadurch gekennzeichnet, dass** die Aufnahmebereiche im nach außen gerichteten Rand des gehäusefesten Hohlrades (20) als radial nach außen offene Aufnahmefächer ausgebildet sind.

8. Antriebssystem nach einem der voranstehenden Ansprüche 5 bis 7, **dadurch gekennzeichnet, dass** die Innenverzahnung (21) des gehäusefesten Hohlrades (20) in einen Metallrand der Basisscheibe (2) eingeformt ist.

9. Antriebssystem nach mindestens einem der voranstehenden Ansprüche 5 bis 8, **dadurch gekennzeichnet, dass** die Zentrierelemente (91, 92) der Basisscheibe (2) mit Gegenzentrierelementen (93, 94) des die feststehende Antriebsachse (40) tragenden ersten Gehäusedeckels (41) korrespondieren.

10. Antriebssystem nach mindestens einem der voranstehenden Ansprüche 5 bis 9, **dadurch gekennzeichnet, dass** die Basisscheibe (2) einen gekröpften peripheren Rand (22) aufweist.

11. Antriebssystem nach mindestens einem der voranstehenden Ansprüche 5 bis 10, **dadurch gekennzeichnet, dass** die Basisscheibe (2) Profilierungen zur Positionierung oder Lagesicherung der Permanentmagnete (32) aufweist.

12. Antriebssystem nach mindestens einem der voranstehenden Ansprüche 5 bis 10, **dadurch gekennzeichnet, dass** die Basisscheibe (2) über Prägungen und/oder gekröpfte Laschen mit einer die Permanentmagnete (32) tragenden Scheibe vorzugsweise aus Kunststoff verbunden ist.

13. Antriebssystem nach einem der voranstehenden Ansprüche 5 bis 12, **dadurch gekennzeichnet, dass** die Basisscheibe (2) aus Kunststoff besteht, in den Aufnahmebereiche eingearbeitet sind, die der Kontur der Permanentmagnete (32) des Scheibenläufermotors (3) zumindest abschnittsweise angepasst sind.

14. Antriebssystem nach einem der voranstehenden Ansprüche 5 bis 12, **dadurch gekennzeichnet, dass** die Basisscheibe (2) aus Kunststoff besteht, in den die Permanentmagnete (32) des Scheibenläufermotors (3) eingegossen sind.

15. Antriebssystem nach mindestens einem der voranstehenden Ansprüche 5 bis 14, **dadurch gekennzeichnet, dass** die Aufnahmebereiche der Basisscheibe (2) aus Laschen bestehen, die aus der Basisscheibe (2) herausgestanzt oder umgebogen sind.

16. Antriebssystem nach mindestens einem der voranstehenden Ansprüche 5 bis 14, **dadurch gekennzeichnet, dass** die Aufnahmebereiche des gehäusefesten Hohlrades (20) oder der Basisscheibe (2) die Permanentmagnete (32) derart weit umschließen, dass eine definierte Lage der Permanentmagnete (32) gesichert ist.

17. Antriebssystem nach einem der voranstehenden Ansprüche, **dadurch gekennzeichnet, dass** die ferritischen Metallteile des Antriebssystems durch Tailored-Blanks nur im Bereich der flussführenden Rückschlüsse aufgedickt sind.

18. Antriebssystem nach mindestens einem der voranstehenden Ansprüche, **dadurch gekennzeichnet, dass** die Antriebsnabe (6) aus einem Stahlprägeteil, einem Sintermetall und/oder einem glasfaser- oder kohlefaserverstärkten Kunststoff besteht.

19. Antriebssystem nach Anspruch 18, **dadurch gekennzeichnet, dass** die Antriebsnabe (6) mehrere aus ihrer Fläche herausgeformte Kröpfungen (63) aufweist.

20. Antriebssystem nach Anspruch 18 oder 19, **dadurch gekennzeichnet, dass** der Antriebsnabenzylinder (60) und/oder die Laufrollenlager (61, 62) als Durchzüge der Antriebsnabe (6) ausgebildet sind.

21. Antriebssystem nach Anspruch 20, **dadurch gekennzeichnet, dass** die Außenzylinderfläche der Durchzüge durch gehärtete Stahlbüchsen mit einem Bund abgestützt wird.

22. Antriebssystem nach Anspruch 20 oder 21, **dadurch gekennzeichnet, dass** die Laufrollen (71, 72) über Gleit- oder Wälzlager (65) auf den Durchzügen oder mit den Durchzügen verbundenen Lagerbolzen (63, 64) gelagert und vorzugsweise asymmetrisch angeordnet sind.

23. Antriebssystem nach mindestens einem der voranstehenden Ansprüche, **dadurch gekennzeichnet, dass** die Laufrollen (71, 72) Nuten (73) zur Führung des radialflexiblen Ringes (8) aufweisen.

24. Antriebssystem nach mindestens einem der voranstehenden Ansprüche, **dadurch gekennzeichnet, dass** in das Abtriebshohlrad (5) in Umfangsrichtung wirksame Dämpfungselemente (56) integriert sind.

25. Antriebssystem nach mindestens einem der voranstehenden Ansprüche, **dadurch gekennzeichnet, dass** das Abtriebshohlrad (5) mit einer Schlingfederbremse verbunden ist.

26. Antriebssystem nach mindestens einem der voranstehenden Ansprüche, **dadurch gekennzeichnet, dass** das Antriebselement (10) der Verstelleinrichtung in axialer Richtung mit dem Abtriebshohlrad (5) verbunden ist. ,

27. Antriebssystem nach Anspruch 26, **dadurch gekennzeichnet, dass** in den zweiten Gehäusedeckel (42) Halteklammern (11) zur axialen Fixierung des Antriebselements (10) der Verstelleinrichtung integriert sind.

28. Antriebssystem nach einem der voranstehenden Ansprüche 25 bis 27, **dadurch gekennzeichnet, dass** zwischen dem Abtriebshohlrad (5) und dem Antriebselement (10) Dämpfungselemente und/oder eine Schlingfederbremse angeordnet ist bzw. sind.

29. Antriebssystem nach mindestens einem der voranstehenden Ansprüche, **dadurch gekennzeichnet, dass** das Abtriebshohlrad (5) in das Antriebselement (15) der Verstelleinrichtung integriert ist.

30. Antriebssystem nach mindestens einem der voranstehenden Ansprüche, **dadurch gekennzeichnet, dass** das Abtriebshohlrad (5) einstückig oder zweistückig aus Kunststoff und einem vorzugsweise metallischen Lagerwerkstoff, insbesondere einem Sintermetall, ausgebildet ist.

31. Antriebssystem nach mindestens einem der voranstehenden Ansprüche 27 bis 29, **dadurch gekennzeichnet, dass** im Abtriebshohlrad ein Stahlring zur Abstützung der auf das Abtriebshohlrad einwirkenden radialen Kräfte angeordnet ist.

32. Antriebssystem nach mindestens einem der voranstehenden Ansprüche, **dadurch gekennzeichnet, dass** der radialflexible Ring (8) einen stützenden Metallring vorzugsweise aus Stahl oder einer Stahllegierung aufweist.

33. Antriebssystem nach mindestens einem der voranstehenden Ansprüche, **dadurch gekennzeichnet, dass** der radialflexible Ring (8) eine Schlingfeder als stützendes Element aufweist.

## Claims

1. Drive system for regulating devices in motor vehicles with a housing in which a drive element of the regulating device, a disc armature motor with an armature disc (31) and a planet wheel transmission are arranged which has a hollow wheel (20) with internal toothing (21) fixed on the housing, an output hollow wheel (5) with an internal toothing (51) connected to the drive element of the regulating device, and a radially flexible ring (8) whose external toothing (82) meshes partially with the internal toothings (21, 51) of the hollow wheel (20) fixed on the housing and of the output hollow wheel (5) and whose inner sleeve face (81) rolls on rollers (71, 72) which are mounted on a drive hub (31) connected to the armature disc (6),
**characterised in that**
a journal (50) of the output hollow wheel (5) extending over a significant part of the length of a fixed drive axle (40) is centred between the fixed drive axle (40) and a drive hub cylinder (60) of the drive hub (6).

2. Drive system according to claim 1, **characterised in that** the length of the drive hub cylinder (60) corresponds substantially to the height of the rollers (71, 782).

3. Drive system according to claim 1 or 2, **characterised in that** the fixed drive axle (40) is connected to a first housing cover (41) of the housing and is supported on a second housing cover (42) of the housing.

4. Drive system according to at least one of the preceding claims, **characterised in that** the fixed drive axle (40) and the drive hub cylinder (60) are made from steel or a steel alloy and the journal (50) centred between the fixed drive axle (40) and the drive hub cylinder (60) is made from sintered metal.

5. Drive system according to at least one of the preceding claims, **characterised in that** the hollow wheel (20) fixed on the housing is connected to a base disc (2) or is formed as a part of a base disc (2) which supports permanent magnets (32) of the disc armature motor (3) and has centring elements (91, 92) which are arranged on the periphery and centre at least one of the two housing covers (41) relative to the base disc (2).

6. Drive system according to claim 5, **characterised in that** socket areas are worked into the outwardly aligned edge of the hollow wheel (20) fixed on the housing and are adapted at least in sections to the contour of the permanent magnets (32) of the disc armature motor (3).

7. Drive system according to claim 5 or 6, **characterised in that** the socket areas are formed in the outwardly directed edge of the hollow wheel (20) fixed on the housing as radially outwardly opening sockets.

8. Drive system according to one of the preceding claims 5 to 7, **characterised in that** the internal toothing (21) of the hollow wheel (20) fixed on the housing is formed in a metal edge of the base disc (2).

9. Drive system according to at least one of the preceding claims 5 to 8, **characterised in that** the centring elements (91, 92) of the base disc (2) correspond to counter centring elements (93, 94) of the first housing cover (41) which support the fixed drive axle (40).

10. Drive system according to at least one of the preceding claims 5 to 9, **characterised in that** the base disc (2) has a cropped peripheral edge (22)

11. Drive system according to at least one of the preceding claims 5 to 10, **characterised in that** the base disc (2) has profiling for positioning or securing the position of the permanent magnets (32).

12. Drive system according to at least one of the preceding claims 5 to 10, **characterised in that** the base disc (2) is connected through stamped indentations and/or cropped bracket plates to a disc preferably of plastics supporting the permanent magnets (32).

13. Drive system according to one of the preceding claims 5 to 12, **characterised in that** the base disc (2) is made of plastics in which socket areas are formed which are adapted at least in sections to the contour of the permanent magnets (32) of the disc armature motor (3).

14. Drive system according to one of the preceding claims 5 to 12, **characterised in that** the base disc (2) consists of plastics in which the permanent magnets (32) of the disc armature motor (3) are cast.

15. Drive system according to at least one of the preceding claims 5 to 14, **characterised in that** the socket areas of the base disc (2) are made from bracket plates which are stamped out or bent round from the base disc (2).

16. Drive system according to at least one of the preceding claims 5 to 14, **characterised in that** the socket areas of the hollow wheel (20) fixed on the housing or of the base disc (2) surround the permanent magnets (32) so far that a defined position of the permanent magnets (32) is ensured.

17. Drive system according to one of the preceding claims, **characterised in that the** ferrite metal parts of the drive system are thickened up by tailored blanks only in the region of the flux-conveying short circuits.

18. Drive system according to at least one of the preceding claims, **characterised in that** the drive hub (6) is made from a steel stamped part, a sintered metal and/or a glass-fibre or carbon-fibre reinforced plastics.

19. Drive system according to claim 18, **characterised in that** the drive hub (6) has several cropped angles (63) formed out from the surface.

20. Drive system according to claim 18 or 19, **characterised in that** the drive hub cylinder (60) and/or the roller bearings (61, 62) are designed as passages through the drive hub (67).

21. Drive system according to claim 20, **characterised in that** the outer cylindrical surface of the passages is supported by hardened steel bushes with collar.

22. Drive system according to claim 20 or 21, **characterised in that** the rollers (71, 72) are mounted and preferably arranged asymmetrically through sliding or rolling bearings (65) on the passages or with bearing bolts (63, 64) connected to the passages.

23. Drive system according to at least one of the preceding claims, **characterised in that** the rollers (71, 72) have grooves (73) for guiding the radially flexible ring (8).

24. Drive system according to at least one of the preceding claims, **characterised in that** circumferentially active damping elements (56) are integrated in the output hollow wheel (5).

25. Drive system according to at least one of the preceding claims, **characterised in that** the output hollow wheel (5) is connected to a loop spring brake.

26. Drive system according to at least one of the preceding claims, **characterised in that** the drive element (10) of the regulating device is connected in the axial direction to the output hollow wheel (5).

27. Drive system according to claim 26, **characterised in that** holding clips (11) are integrated in the second housing cover (42) for axially fixing the drive element (10) of the regulating device.

28. Drive system according to one of the preceding claims 25 to 27, **characterised in that** damping elements and/or a loop spring brake is/are mounted between the output hollow wheel (5) and the drive element (10).

29. Drive system according to at least one of the preceding claims, **characterised in that** the output hollow wheel (5) is integrated in the drive element (15) of the regulating device.

30. Drive system according to at least one of the preceding claims, **characterised in that** the output hollow wheel (5) is formed in one piece or in two pieces of plastics and a preferably metal bearing material, more particularly a sintered metal.

31. Drive system according to at least one of the preceding claims 27 to 29, **characterised in that** a steel ring is mounted in the output hollow wheel to support the radial forces acting on the output hollow wheel.

32. Drive system according to at least one of the preceding claims, **characterised in that** the radially flexible ring (8) has a supporting metal ring preferably of steel or a steel alloy.

33. Drive system according to at least one of the preceding claims, **characterised in that** the radially flexible ring (8) has a loop spring as supporting element.

## Revendications

1. Système d'entraînement pour des dispositifs de réglage dans des véhicules automobiles comportant un boîtier, dans lequel sont disposés un élément d'entraînement du dispositif de réglage, un moteur à entrefer plat doté d'une plaque d'induit (31) et un engrenage planétaire, lequel présente une couronne (20) fixée au boîtier avec une denture intérieure (21), une couronne de sortie (5) reliée à l'élément d'entraînement du dispositif de réglage avec une denture intérieure (51) et une bague (8) radialement flexible, dont la denture extérieure (82) engrène partiellement avec les dentures intérieures (21, 51) de la couronne (20) fixée au boîtier et de la couronne de sortie (5) et dont la surface enveloppe interne (81) roule sur des galets de roulement (71, 72) qui sont disposés sur un moyeu d'entraînement (6) relié à la plaque d'induit (31),
**caractérisé en ce qu'**un tourillon (50) s'étendant sur une majeure partie de la longueur d'un arbre primaire (40) fixe de la couronne de sortie (5) est centré entre l'arbre primaire (40) fixe et un cylindre (60) du moyeu d'entraînement (6).

2. Système d'entraînement selon la revendication 1, **caractérisé en ce que** la longueur du cylindre (60) de moyeu d'entraînement correspond sensiblement à la hauteur des galets de roulement (71, 72).

3. Système d'entraînement selon la revendication 1 ou 2, **caractérisé en ce que** l'arbre primaire (40) fixe est relié à un premier couvercle (41) du boîtier et est en appui contre un second couvercle (42) du boîtier.

4. Système d'entraînement selon au moins l'une des revendications précédentes, **caractérisé en ce que** l'arbre primaire (40) fixe et le cylindre de moyeu d'entraînement (60) sont constitués en acier ou en un alliage d'acier et le tourillon (50) centré entre l'arbre primaire (40) fixe et le cylindre de moyeu d'entraînement (60) sont constitués en un métal fritté.

5. Système d'entraînement selon au moins l'une des revendications précédentes, **caractérisé en ce que** la couronne (20) fixée au boîtier est reliée à une plaque de base (2) ou est réalisée comme partie d'une plaque de base (2) qui porte des aimants permanents (32) du moteur à entrefer plat (3) et présente des éléments de centrage (91, 92) disposés sur sa périphérie, lesquels centrent au moins l'un des deux couvercles de boîtier (41) par rapport à la plaque de base (2).

6. Système d'entraînement selon la revendication 5, **caractérisé en ce que** dans le bord dirigé vers l'extérieur de la couronne (20) fixée au boîtier sont usinées des zones de réception qui sont adaptées au moins par zones au contour des aimants permanents (32) du moteur à entrefer plat (3).

7. Système d'entraînement selon la revendication 5 ou 6, **caractérisé en ce que** les zones de réception réalisées dans le bord dirigé vers l'extérieur de la couronne (20) fixée au boîtier sont constituées comme compartiments de réception ouverts radialement vers l'extérieur.

8. Système d'entraînement selon l'une des revendications précédentes 5 à 7, **caractérisé en ce que** la denture intérieure (21) de la couronne (20) fixée au boîtier est moulée dans un bord métallique de la plaque de base (2).

9. Système d'entraînement selon au moins l'une des revendications précédentes 5 à 8, **caractérisé en ce que** les éléments de centrage (91, 92) de la plaque de base (2) correspondent aux éléments de centrage antagonistes (93, 94) du premier couvercle de boîtier (41) portant l'arbre primaire (40) fixe.

10. Système d'entraînement selon au moins l'une des revendications précédentes 5 à 9, **caractérisé en ce que** la plaque de base (2) présente un bord (22) périphérique coudé.

11. Système d'entraînement selon au moins l'une des revendications précédentes 5 à 10, **caractérisé en ce que** la plaque de base (2) présente des profilages pour positionner ou bloquer en position les aimants permanents (32).

12. Système d'entraînement selon au moins l'une des revendications précédentes 5 à 10, **caractérisé en ce que** la plaque de base (2) est reliée par le biais de gaufrures et/ou de pattes coudées à une plaque portant les aimants permanents (32) de préférence en matière plastique.

13. Système d'entraînement selon l'une des revendications précédentes 5 à 12, **caractérisé en ce que** la plaque de base (2) est en matière plastique, dans laquelle sont usinées des zones de réception qui sont adaptées au moins par zones au contour des aimants permanents (32) du moteur à entrefer plat (3).

14. Système d'entraînement selon l'une des revendications précédentes 5 à 12, **caractérisé en ce que** la plaque de base (2) est en matière plastique, dans laquelle les aimants permanents (32) du moteur à entrefer plat (3) sont noyés.

15. Système d'entraînement selon au moins l'une des revendications précédentes 5 à 14, **caractérisé en ce que** les zones de réception de la plaque de base (2) se composent de pattes qui sont découpées à la matrice ou pliées dans la plaque de base (2).

16. Système d'entraînement selon au moins l'une des revendications précédentes 5 à 14, **caractérisé en ce que** les zones de réception de la couronne (20) fixée au boîtier ou de la plaque de base (2) entourent largement les aimants permanents (32) de telle sorte qu'une position définie des aimants permanents (32) soit assurée.

17. Système d'entraînement selon l'une des revendications précédentes, **caractérisé en ce que** les parties métalliques ferritiques du système d'entraînement sont épaissies par des Tailored-Blanks seulement dans la zone des dérivations guidant le flux.

18. Système d'entraînement selon au moins l'une des revendications précédentes, **caractérisé en ce que** le moyeu d'entraînement (6) se compose d'une partie gaufrée en acier, d'un métal fritté et/ou d'une matière plastique renforcée par fibres de verre ou fibres de carbone.

19. Système d'entraînement selon la revendication 18, **caractérisé en ce que** le moyeu d'entraînement (6) présente plusieurs coudes (63) formés dans sa surface.

20. Système d'entraînement selon la revendication 18 ou 19, **caractérisé en ce que** le cylindre de moyeu d'entraînement (60) et/ou les paliers de galet de roulement (61, 62) sont réalisés comme passages du moyeu d'entraînement (6).

21. Système d'entraînement selon la revendication 20, **caractérisé en ce que** la surface de cylindre externe des passages est soutenue par des douilles en acier trempées dotées d'un collet.

22. Système d'entraînement selon la revendication 20 ou 21, **caractérisé en ce que** les galets de roulement (71, 72) sont logés par le biais de paliers lisses ou à roulement (65) sur les passages ou les axes de palier (63, 64) reliés aux passages et de préférence sont disposés de manière asymétrique.

23. Système d'entraînement selon au moins l'une des revendications précédentes, **caractérisé en ce que** les galets de roulement (71, 72) présentent des rainures (73) pour le guidage de la bague (8) radialement flexible.

24. Système d'entraînement selon au moins l'une des revendications précédentes, **caractérisé en ce que** des éléments d'amortissement (56) actifs dans le sens périphérique sont intégrés dans la couronne de sortie (5).

25. Système d'entraînement selon au moins l'une des revendications précédentes, **caractérisé en ce que** la couronne de sortie (5) est reliée à un frein à ressort enroulé.

26. Système d'entraînement selon au moins l'une des revendications précédentes, **caractérisé en ce que** l'élément d'entraînement (10) du dispositif de réglage est relié dans le sens axial à la couronne de sortie (5).

27. Système d'entraînement selon la revendication 26, **caractérisé en ce que** dans le second couvercle de boîtier (42) sont intégrés des clips de retenue (11) pour la fixation axiale de l'élément d'entraînement (10) du dispositif de réglage.

28. Système d'entraînement selon l'une des revendications précédentes 25 à 27, **caractérisé en ce que** des éléments d'amortissement et/ou un frein à ressort enroulé est disposé entre la couronne de sortie (5) et l'élément d'entraînement (10).

29. Système d'entraînement selon au moins l'une des revendications précédentes, **caractérisé en ce que** la couronne de sortie (5) est intégrée dans l'élément d'entraînement (15) du dispositif de réglage.

30. Système d'entraînement selon au moins l'une des revendications précédentes, **caractérisé en ce que** la couronne de sortie (5) est réalisée d'un seul tenant ou en deux parties en matière plastique et en un matériau pour palier de préférence métallique, notamment un métal fritté.

31. Système d'entraînement selon au moins l'une des revendications précédentes 27 à 29, **caractérisé en ce qu'**une bague en acier est disposée dans la couronne de sortie pour supporter les forces radiales agissant sur la couronne de sortie.

32. Système d'entraînement selon au moins l'une des revendications précédentes, **caractérisé en ce que** la bague (8) radialement flexible présente une bague métallique de support de préférence en acier ou en un alliage d'acier.

33. Système d'entraînement selon au moins l'une des revendications précédentes, **caractérisé en ce que** la bague (8) radialement flexible présente un ressort enroulé comme élément de support.
